(19) Europäisches Patentamt
European Patent Office
Office européen des brevets

(11) Publication number: 0 161 789 B1

(12) # EUROPEAN PATENT SPECIFICATION

(45) Date of publication of patent specification: 06.09.89

(51) Int. Cl.[4]: **C 09 B 23/04**, C 09 B 23/10, G 03 C 1/16, G 03 C 1/22

(21) Application number: 85302483.4

(22) Date of filing: 09.04.85

(54) **Cyanine and merocyanine spectral sensitizing dyes.**

(30) Priority: 09.04.84 US 598187

(43) Date of publication of application: 21.11.85 Bulletin 85/47

(45) Publication of the grant of the patent: 06.09.89 Bulletin 89/36

(84) Designated Contracting States: BE DE FR GB

(58) References cited: US-A-3 260 601

(73) Proprietor: E.I. DU PONT DE NEMOURS AND COMPANY
1007 Market Street
Wilmington Delaware 19898 (US)

(72) Inventor: Wheeler, James Walter
57 Bent Oak Trail R.D. 5
Fairport New York 14450 (US)

(74) Representative: Watkins, Arnold Jack et al
European Patent Attorney Frank B. Dehn & Co.
Imperial House 15-19 Kingsway
London WC2B 6UZ (GB)

EP 0 161 789 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention is directed to a new group of cyanine and merocyanine spectral sensitizing dyes which can be prepared from 3-indolizine carboxaldehyde, and more specifically to direct positive emulsions sensitized therewith.

The prior art describes many dye systems which can be used in the photographic industry to extend the spectral sensitivity of a light-sensitive silver halide emulsion, for both negative-working and positive working (direct positive) systems. A light-sensitive silver halide emulsion is spectrally sensitized when it is rendered more sensitive by addition of dyes which absorb certain portions of the spectrum. Dyes are needed which sensitize direct positive emulsions in the red and orange spectral region for films which are exposed with an orange or red phosphor or laser. Previously known orange and red direct positive dyes are symmetrical carbocyanines and generally give low speed and low contrast.

On the other hand US—A—3 260 601 describes dyes derived from 3-substituted pyrrocolines. The dyes are used in filter and antihalation layers and there is no mention of spectral sensitizing properties.

This invention is directed to a new group of spectral sensitizing dyes which can be made from derivatives of 3-indolizine carboxaldehyde, which sensitize direct positive silver halide emulsions to orange and red light and which can serve to provide photographic films which demonstrate high speed and high gradient.

According to one feature of the invention there is thus provided a spectral sensitizing dye selected from the group consisting of cyanines having the general formula I:

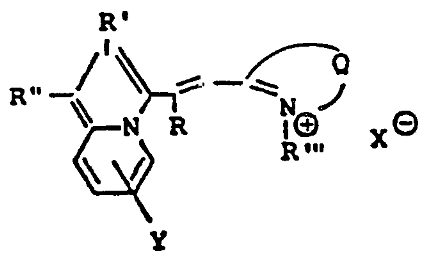

(I)

wherein R is H or alkyl of 1—4 carbon atoms; R′ and R″ are H, alkyl of 1—7 carbon atoms, substituted alkyl, aryl (e.g. phenyl) or substituted aryl (e.g. substituted phenyl) and R‴ may be any of the groups represented by R′ and R″ and may also be alkenyl of not more than 7 carbon atoms; Y is hydrogen, alkyl of 1—4 carbon atoms, $NO_2$ or halogen; Q represents sufficient carbon, nitrogen and/or sulfur atoms to form a 5- or 6-member heterocyclic or substituted heterocyclic ring; and X is an anion; and merocyanines having the general formula II:

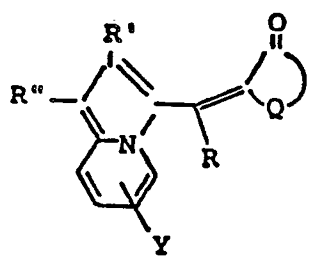

(II)

wherein R is H or alkyl of 1—4 carbon atoms; R′, R″ and Y are as defined above; and Q represents sufficient carbon, nitrogen and/or sulfur atoms to form a 5- or 6-member heterocyclic or substituted heterocyclic ring; with the proviso that in formula I when R is a hydrogen atom, R′ and R″ are phenyl groups and Y is a hydrogen atom, then Q and R‴ together with the nitrogen and carbon atoms to which they are attached do not form a 1,3,3-trimethyl-2-indolenine group.

When Q in formula I or formula II forms a substituted heterocyclic ring, the substituents may be such as to form a fused ring system.

According to a further feature of the present invention, there is provided a light-sensitive silver halide emulsion which contains an effective amount of spectral sensitizing dye selected from the group consisting of cyanines having the general formula I:

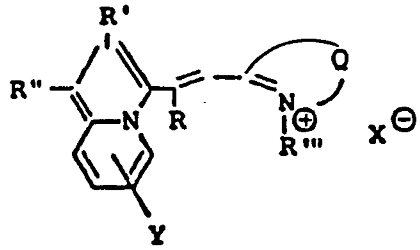

(I)

wherein R is H or alkyl of 1—4 carbon atoms; R′ and R″ are H, alkyl of 1—7 carbon atoms, substituted alkyl, aryl or substituted aryl and R‴ may be any of the groups represented by R′ and R″ and may also be alkenyl of not more than 7 carbon atoms; Y is hydrogen, alkyl of 1—4 carbon atoms, $NO_2$ or halogen; Q represents sufficient carbon, nitrogen and/or sulfur atoms to form a 5- or 6-member heterocyclic or substituted heterocyclic ring; and X is an anion; and merocyanines having the general formula II:

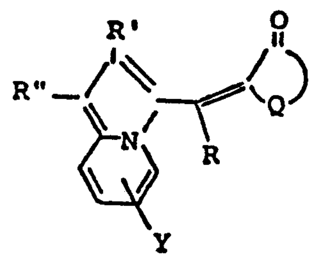

(II)

wherein R is H or alkyl of 1—4 carbon atoms; R′, R″ and Y are as defined above; and Q represents sufficient carbon, nitrogen and/or sulfur atoms to form a 5- or 6-member heterocyclic or substituted heterocyclic ring.

According to a still further feature of the present invention, there is provided a direct positive photographic film comprising a support, a fogged gelatino-silver halide emulsion on said support, and optionally one or more auxiliary layers, characterized in that the emulsion contains an effective amount of a spectral sensitizing dye selected from the group consisting of cyanines having the general formula I:

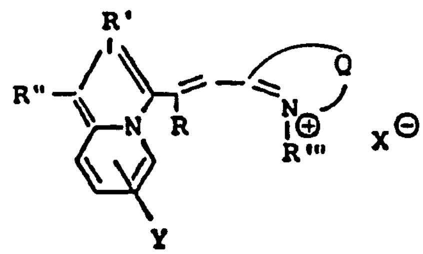

(I)

wherein R is H or alkyl of 1—4 carbon atoms; R′ and R″ are H, alkyl of 1—7 carbon atoms, substituted alkyl, aryl or substituted aryl and R‴ may be any of the groups represented by R′ and R″ and may also be alkenyl of not more than 7 carbon atoms; Y is hydrogen, alkyl of 1—4 carbon atoms, $NO_2$ or halogen; Q represents sufficient carbon, nitrogen and/or sulfur atoms to form a 5- or 6-member heterocyclic or substituted heterocyclic ring; and X is an anion; and merocyanines having the general formula II:

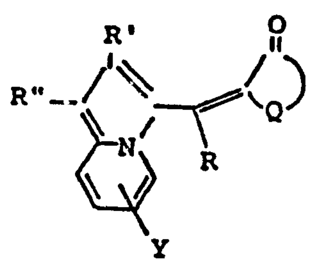

(II)

wherein R is H or alkyl of 1—4 carbon atoms; R′, R″ and Y are as defined above; and Q represents sufficient carbon, nitrogen and/or sulfur atoms to form a 5- or 6-member heterocyclic or substituted heterocyclic ring.

The dyes of formulae I and II are usually made up as dilute alcohol solution and are added to a gelatino-silver halide emulsion in amounts ranging from 0.01 g to 1.2 g per 1.5 moles of silver halide.

Where any of R′, R″ and R‴ represents substituted aryl, e.g. substituted phenyl, the substituent may

for example be alkoxy (e.g. methoxy) or nitro. R′ preferably represents methyl, phenyl, p-methoxyphenyl or p-nitrophenyl. R″ preferably represents hydrogen. R‴ preferably represents alkyl or alkenyl containing up to 4 carbon atoms, e.g. methyl or 2-propenyl. The anion is preferably 4-methylbenzenesulfonate or tetraphenylborate.

Typical positive-working, gelatino-silver halide emulsions useful in the practice of this invention are legion in number and description. It is preferred to use silver bromoiodide prepared from a balanced, double-jet-type precipitation (about 0.2 μ edge length) containing about $8 \times 10^{-5}$ mole percent rhodium in about 190 g gelatin per mole of silver halide. These emulsions are fogged with cesium thiadecaborane and hydrochloroauric acid and contain sensitizing adjuvants such as polyethylene oxides. The emulsion can be coated at about 0.4—3 g Ag/m² coating weight on a paper or a polyester base having an antihalation backing layer, and the emulsion hardened with formaldehyde.

Some typical dye structures representative of the dyes of this invention include:

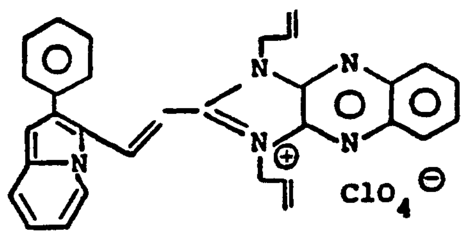

(A)

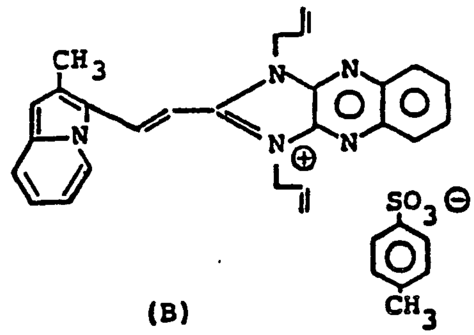

(B)

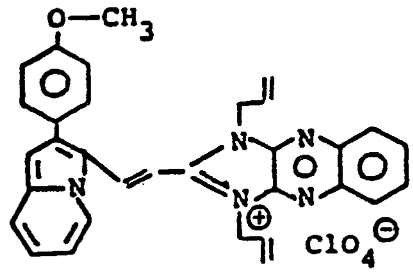

(C)

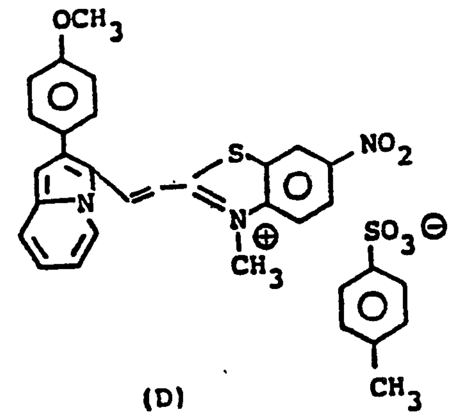

(D)

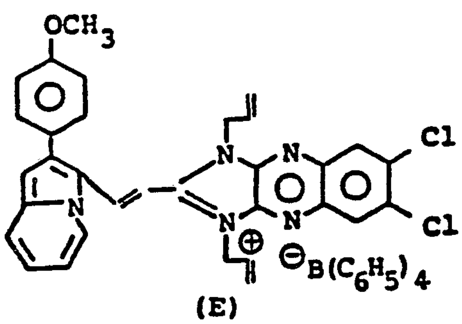

(E)

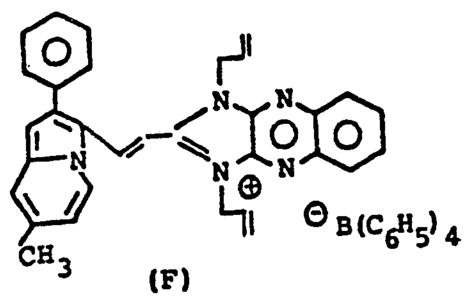

(F)

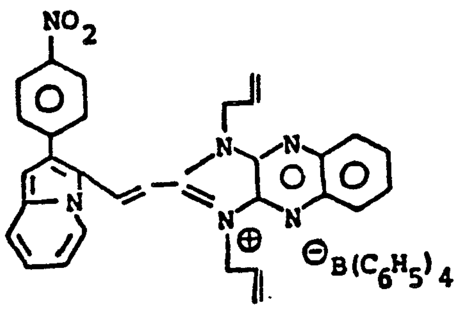

(G)

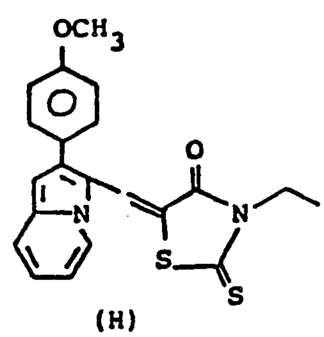

(H)

As stated above, these emulsions may be coated on a polyester or paper support, but it is preferable to use 0.004 inch (0.1 mm) thick polyethylene terephthalate film coated on both sides with the subbing layer of Rawlins, U.S. Pat. No. 3,443,950 (vinylidene chloride/alkyl acrylate/itaconic acid copolymer mixed with an alkyl acrylate and/or methacrylate polymer) overcoated with a thin substratum of gelatin. A conventional antihalation layer is preferably applied on one side and the sensitized, fogged emulsion of this invention on the opposite side of the film support. After drying, film strip samples of the resulting photographic film can be tested by a $10^{-3}$ second exposure through a $\sqrt{2}$ step wedge on the Mark 6 Sensitometer made by E. G. And G. Co. which uses the GE type FT—118 Xenon Flash Tube. After exposure, the strips may be developed in any conventional developer (e.g., mixed hydroquinone/phenidone developing agent). One preferred developer contains the following ingredients:

| Ingredient | Amt. (g/l) |
|---|---|
| Sodium Metaborate | 19.8 |
| Sodium Sulfite | 244.4 |
| Sodium Carbonate | 35.7 |
| Sodium Hydroxide (45% soln.) | 151.9 |
| 5-Nitrobenzimidazole | 0.09 |
| Benzotriazole | 0.92 |
| 1-Phenyl-5-Mercaptobenzotriazole | 0.10 |
| Hydroquinone | 111.0 |
| Phenidone | 5.95 |
| Potassium Bromide | 5.35 |
| pH 11.6—12.0 | |

Additional wetting agents, sequestrants, and adjuvants may also be incorporated in the developer, as known to those skilled in the art. Typically, the exposed strips are developed for about 30 seconds in the above developer at 95°F (35°C) followed by a 50 second water wash, and fixed for 30 seconds in a conventional ammonium thiosulfate fixer at a pH of about 5.4 and a temperature of 95°F (35°C). The fixed element is then washed 30 seconds in water and dried.

In addition, the dyes of this invention can be used as a dye pair to supersensitize a direct positive emulsion, especially when combined with the dyes of U.S. 4,355,098. Supersensitization usually results in speed and spectral extension of the emulsion beyond that which might be predicted from a simple arithmetic addition of the individual effects produced by each dye alone. Supersensitization is an old phenomenon in the negative-working silver halide industry. A good review of this subject is found, for example, in Gilman et al, J. Photogr. Sci., Vol. 21, pages 53—70 (1973). Supersensitization of direct positive emulsions using dye pairs is also known in the prior art.

This invention will now be illustrated by the following non-limiting specific examples:

## Dye Intermediate Preparation

2-phenyl-3-indolizine carboxaldehyde

A slurry of 10 g of 2-phenylindolizine in 60 ml of DMF was added to a solution of 10 ml of phosphorus oxychloride in 30 ml of N,N-dimethylformamide (DMF) at 10—20°C. After the reaction solution was stirred at room temperature for two hours, it was poured onto 20 g of ice.

60 g of 25 percent sodium hydroxide solution was added and the resulting mixture was heated to 60°C. After cooling to room temperature, the mixture was filtered, and the solid collected was washed with water. The air-dried solid weighed 11 g.

2-(4-methoxyphenyl)indolizine

10 g of 2-picoline and 25 g of 4-methoxyphenacyl bromide in 35 ml of ethanol were refluxed for 18 hours. The reaction solution was concentrated under reduced pressure to give a solid, which was dissolved in 350 ml of water. After the aqueous solution was extracted with three 35 ml portions of ether, 35 g of sodium bicarbonate was added to the aqueous solution and was refluxed two hours. The cooled reaction mixture was filtered to give 20 g of product.

2-(4-methoxyphenyl)-3-indolizine carboxaldehyde

A slurry of 20 g of 2-(4-methoxy phenyl)indolizine in 35 ml of DMF was added to a solution of 10 ml of phosphorus oxychloride in 30 ml of DMF at 10—20°C. After the reaction solution was stirred at 40° for 40 min., it was added to 200 g of ice, 120 g of 25 percent sodium hydroxide solution was added and the resulting mixture was heated to 55°C, cooled, and filtered. The air-dried product weighed 23 g.

Dye Preparation

Dye A

1.2 g of 2-phenyl-3-indolizine carboxyaldehyde and 2.2 g of 1,3-di-2-propenyl-2-methylimidazo[4,5-b]quinoxalinium salt, 4-methylbenzenesulfonic acid (1:1) in 10 ml of acetic anhydride were refluxed for three min. The cooled reaction solution was added to 100 ml of ether. The oil obtained was dissolved in 40 ml of methanol. 5 g of sodium perchlorate in 40 ml of water: methanol (1:1) was added to form the crystalline dye. The crystals were filtered, washed with methanol, and air dried to give 2.1 g of the product (λmax = 565 nm in methanol).

Dye B

1 g of 2-methyl-3-indolizine carboxaldehyde, 2.2 g of 1,3-di-2-propenyl-2-methylimidazo[4.5-b]quinoxalinium salt, 4-methylbenzene sulfonic acid (1:1) in 10 ml of acetic anhydride were refluxed for 2 min. The reaction solution was added to 100 ml of ether and triturated. The resulting dye crystals were filtered and dried to give 0.6 g of the product (λmax = 520 nm in methanol).

Dye C

1.3 g of 2-(4-methoxy phenyl)-3-indolizine carboxaldehyde and 2.2 g of 1,3-di-2-propenyl-2-methyl-imidazo[4,5-b]quinoxalinium salt, 4-methylbenzenesulfonic acid (1:1) in 10 ml of acetic anhydride were refluxed for six min. The cooled reaction mixture was added to 100 ml of ether. The solvent was decanted from the dark oil. The oil was dissolved in 20 ml of methanol. 5 g of sodium perchlorate in 20 ml of methanol was added to give a crystalline product. The dye was filtered and air dried to give 1.8 g of the product (λmax = 570 nm in methanol).

Dye D

0.76 g of 2,3-dimethyl-6-nitrobenzothiazolium salt, 4-methylbenzenesulfonic acid (1:1), 0.65 g of 2-(4-methoxyphenyl)-3-indolizine carboxaldehyde, one drop of piperidine, and 6 ml of ethanol were refluxed for five min. The dye crystallized upon cooling and was filtered and air dried to give 1.0 g of the product (λmax = 570 nm in methanol).

Dye E

0.5 g of 2-(4-methoxyphenyl)-3-indolizine carboxyaldehyde, and 0.9 g of 5,6-dichloro-1,3-di-2-propenyl-2-methylimidazo[4,5-b] quinoxalinium salt, 4-methylbenzenesulfonic acid (1:1) in 3.6 ml of acetic anhydride were refluxed for three min. A solution of one gram of sodium tetraphenylborate in 5 ml of methanol was added. The solvent was decanted from the gum.

Triturating the gum with 20 ml of methanol gave crystalline dye. The filtered and air-dried dye weighed 1.2 g (λmax = 580 nm in methanol).

Dye H

0.8 g of N-ethyl rhodanine and 1.3 g of 2-(4-methoxy phenyl)-3-indolizine carboxaldehyde in 5 ml of acetic anhydride were refluxed for five min. The dye (0.5 g) was filtered from the cooled reaction mixture.

Examples 1—4

A cubic grain silver iodobromide emulsion containing ca. 4.75 weight percent silver, 4.0 weight percent gelatin, 98% bromide and 2% iodide, and having about $8 \times 10^{-5}$ mole percent rhodium therein, was fogged with cesium thiadecaborane and hydrochloroauric acid to achieve optimum direct positive sensitivity. Standard wetting agents, hardeners, antifoggants and the like were also added. The emulsion was then split into four portions, and one of the dyes of this invention added to each portion as shown. The dyes were made up at 35 mg dye/20 ml of methanol. After addition of the dyes, each part of emulsion was then coated on polyethylene terephthalate film at about 28 mg/dm$^2$ coating weight and dried. Strips of these films were tested by exposure to a point source of incandescent light through a $\sqrt{2}$- step wedge for about 20 seconds. The strips were developed in a conventional mixed hydroquinone/phenidone developer, fixed, washed, and dried. The following results were achieved.

| Example | Dye Structure | Rel Speed | Dmax | Dmin | Spectral Sens. (λmax in nm) |
|---|---|---|---|---|---|
| 1 | A | 0.84 | 5.15 | 0.17 | 600 |
| 2 | B | 3.41 | 5.21 | 0.05 | 585 |
| 3 | G | 0.87 | 4.92 | 0.18 | 595 |
| 4 | E | 1.80 | 6.39 | 0.05 | 575 |

These results demonstrate that the dyes can sensitize a direct positive emulsion with good speed and high Dmax. Dye B is preferred.

Examples 5—9

An emulsion similar to that described in Examples 1—4 was prepared and split into five portions. Various dyes of this invention were added in supersensitizing combination with a prior art dye taken from U.S. 4,355,098 with the following structure:

Dye I

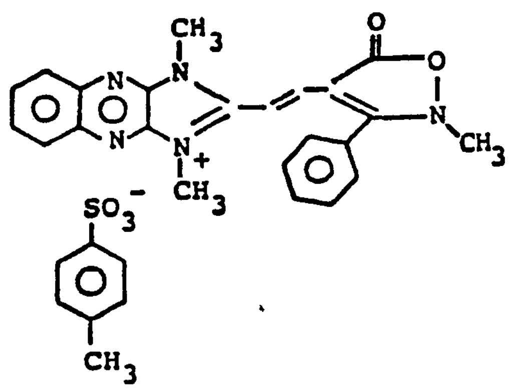

The dyes were added at 30 mg for the dyes of this invention and 90 mg for Dye I, above, dissolved in methanol. One portion had Dye I above as control. The emulsions were coated, dried, sampled, exposed, developed, fixed, and washed per Example 1—4 with the following results:

| Example | Dye Used | Rel Speed | Dmax | Dmin |
|---|---|---|---|---|
| 5 | A | 6.66 | 4.27 | 0.04 |
| 6 | B | 12.12 | 4.86 | 0.04 |
| 7 | G | 5.64 | 4.81 | 0.05 |
| 8 | E | 7.30 | 4.71 | 0.04 |
| 9 | I-control | 4.15 | 5.17 | 0.04 |

In a like manner, other dyes described above and fitting the broad disclosure of this invention, were tested either singly or as a supersensitizer dye pair. All functioned well for purposes of this invention.

## Claims

1. A spectral sensitizing dye selected from the group consisting of cyanines having the general formula I:

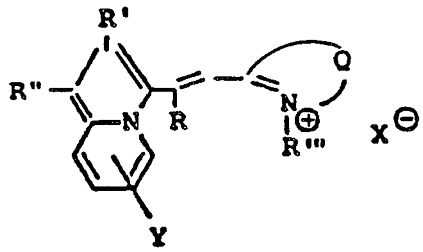

(I)

wherein R is H or alkyl of 1—4 carbon atoms; R′ and R″ are H, alkyl of 1—7 carbon atoms, substituted alkyl, aryl or substituted aryl and R‴ may be any of the groups represented by R′ and R″ and may also be alkenyl of not more than 7 carbon atoms; Y is hydrogen, alkyl of 1—4 carbon atoms, $NO_2$ or halogen; Q represents sufficient carbon, nitrogen and/or sulfur atoms to form a 5- or 6-member heterocyclic or substituted heterocyclic ring; and X is an anion; and merocyanines having the general formula II:

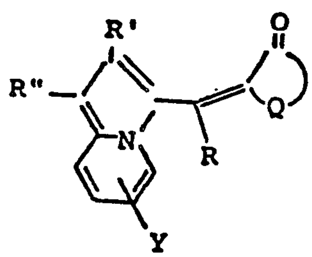

(II)

wherein R is H or alkyl of 1—4 carbon atoms; R′, R″ and Y are as defined above; and Q represents sufficient carbon, nitrogen and/or sulfur atoms to form a 5- or 6-member heterocyclic or substituted heterocyclic ring; with the proviso that in formula I, when R is a hydrogen atom, R′ and R″ are phenyl groups and Y is a hydrogen atom, then Q and R‴ together with the nitrogen and carbon atoms to which they are attached do not form a 1,3,3-trimethyl-2-indolenine group.

2. A dye of formula I or formula II as claimed in claim 1 wherein R″ is a hydrogen atom.

3. A dye as claimed in claim 1 having the formula

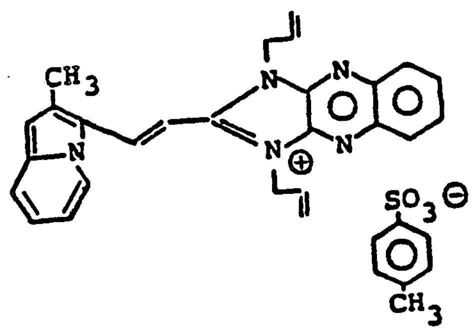

(B)

4. A dye as claimed in claim 1 selected from compounds of the formulae

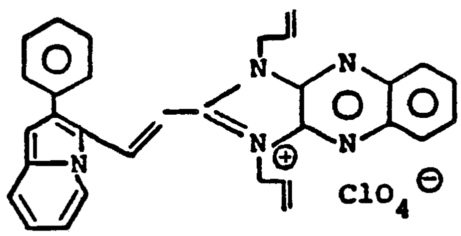

(A)

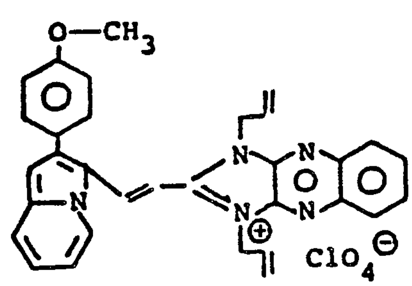

(C)

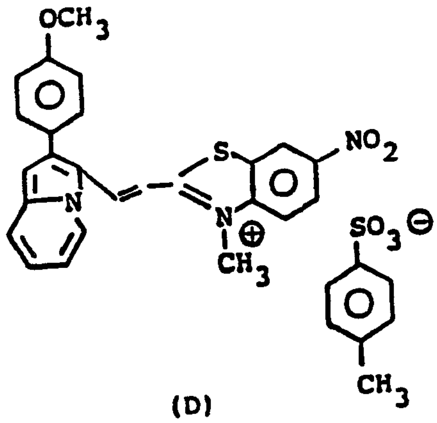

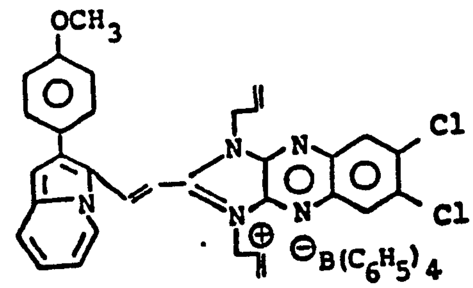

(E)

(D)

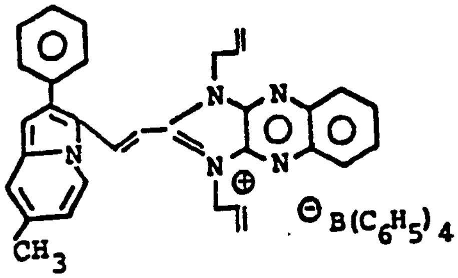

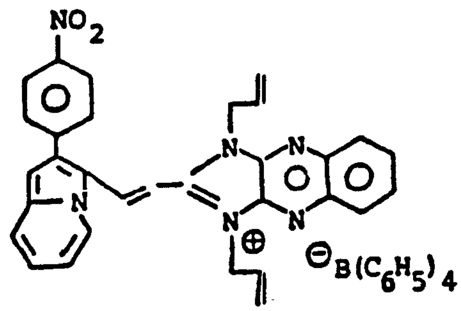

(F)

(G),

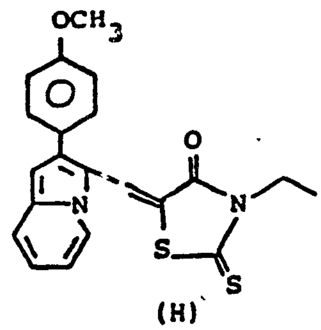

(H)

5. A light-sensitive silver halide emulsion which contains an effective amount of a spectral sensitizing dye selected from the group consisting of cyanines having the general formula I:

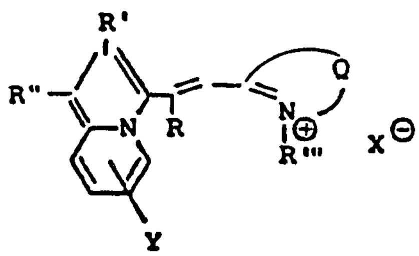

(I)

wherein R is H or alkyl of 1—4 carbon atoms; R′ and R″ are H, alkyl of 1—7 carbon atoms, substituted alkyl, aryl or substituted aryl and R‴ may be any of the groups represented by R′ and R″ and may also be alkenyl of not more than 7 carbon atoms; Y is hydrogen, alkyl of 1—4 carbon atoms, $NO_2$ or halogen; Q represents sufficient carbon, nitrogen and/or sulfur atoms to form a 5- or 6-member heterocyclic or substituted heterocyclic ring; and X is an anion; and merocyanines having the general formula II:

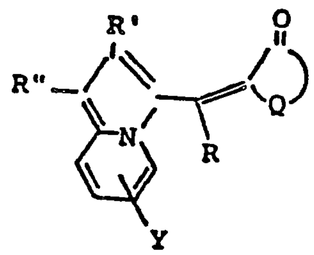

(II)

wherein R is H or alkyl of 1—4 carbon atoms; R′, R″ and Y are as defined above; and Q represents sufficient carbon, nitrogen and/or sulfur atoms to form a 5- or 6-member heterocyclic or substituted heterocyclic ring.

6. An emulsion as claimed in claim 5 wherein the dye is as defined in any of claims 2 to 4.

7. An emulsion as claimed in claim 5 or claim 6 which is a gelatino-silver halide emulsion containing from 0.01 to 1.2 g of the spectral sensitizing dye per 1.5 moles of silver halide.

8. An emulsion as claimed in any of claims 5 to 7 which contains silver bromoiodide.

9. A direct positive photographic film comprising a support, a fogged gelatino-silver halide emulsion on said support, and optionally one or more auxiliary layers, characterized in that the emulsion contains an effective amount of a spectral sensitizing dye as defined in claim 5.

10. A film as claimed in claim 9 wherein the dye is as defined in any of claims 2 to 4.

11. A film as claimed in claim 9 or claim 10 wherein the support is paper or a polyester base having an antihalation backing layer.

12. A film as claimed in any of claims 9 to 11 wherein the emulsion is coated on the support at about 0.4—3 g $Ag/m^2$.

13. A film as claimed in claim 11 or claim 12 wherein the polyester base is a polyethylene terephthalate base.

14. A film as claimed in any of claims 9 to 14 wherein the emulsion contains an effective amount of a supersensitizing dye pair in which one member of said dye pair is a sensitizing dye as defined in claim 5.

15. A film as claimed in claim 14 wherein one member of said dye pair is a dye as defined in any of claims 2 to 4.

**Patentansprüche**

1. Spektraler, sensibilisierender Farbstoff, ausgewählt aus der Gruppe, die aus Cyaninen der allgemeinen Formel I

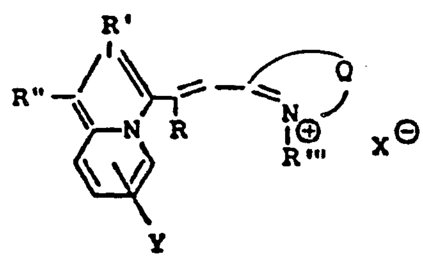

(I)

in der

R H oder Alkyl mit 1 bis 4 Kohlenstoff-Atomen ist,

R′ und R″ H, Alkyl mit 1 bis 7 Kohlenstoff-Atomen, substituiertes Alkyl, Aryl oder substituiertes Aryl ist und

R‴ irgendeine der durch R′ und R″ dargestellten Gruppen sein kann und auch Alkenyl mit nicht mehr als 7 Kohlenstoff-Atomen sein kann,

Y Wasserstoff, Alkyl mit 1 bis 4 Kohlenstoff-Atomen, $NO_2$ oder Halogen ist,

Q ausreichend Kohlenstoff-, Stickstoff- und/oder Schwefel-Atome bezeichnet, um einen 5- oder 6-gliedrigen heterocyclischen oder substituierten heterocyclischen Ring zu bilden, und

X ein Anion ist,

und aus Merocyaninen der allgemeinen Formel II

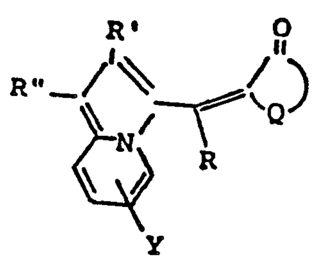

(II)

in der

R H oder Alkyl mit 1 bis 4 Kohlenstoff-Atomen ist,

R', R'' und Y die oben angegebenen Bedeutungen haben und

Q ausreichend Kohlenstoff-, Stickstoff- und/oder Schwefel-Atome bezeichnet, um einen 5- oder 6-gliedrigen heterocyclischen oder substituierten heterocyclischen Ring zu bilden,

besteht, mit der Maßgabe, daß in der Formel I, wenn R ein Wasserstoff-Atom ist, R' und R'' Phenyl-Gruppen sind und Y ein Wasserstoff-Atom ist, dann Q und R''' zusammen mit den Stickstoff- und Kohlenstoff-Atomen, an die sie gebunden sind, keine 1,3,3-Trimethyl-2-indolenin-Gruppe bilden.

2. Farbstoff der Formel I oder der Formel II nach Anspruch 1, worin R'' ein Wasserstoff-Atom ist.

3. Farbstoff nach Anspruch 1 mit der Formel

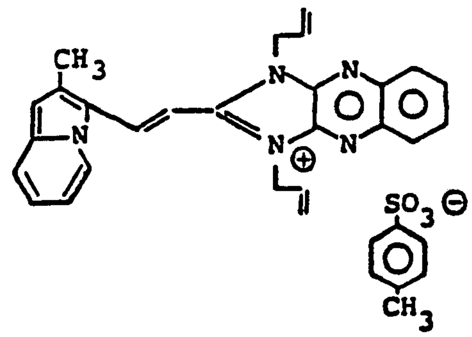

(B)

4. Farbstoff nach Anspruch 1, ausgewählt aus Verbindungen der Formeln

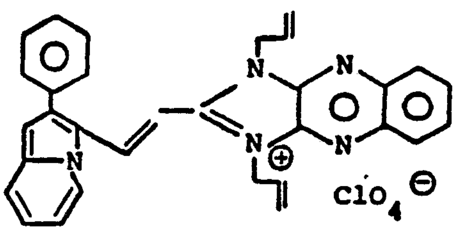

(A)

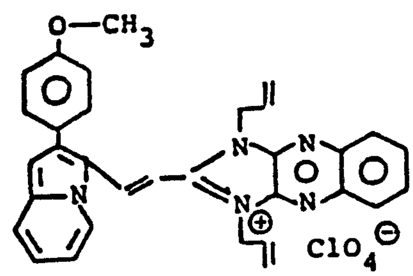

(C)

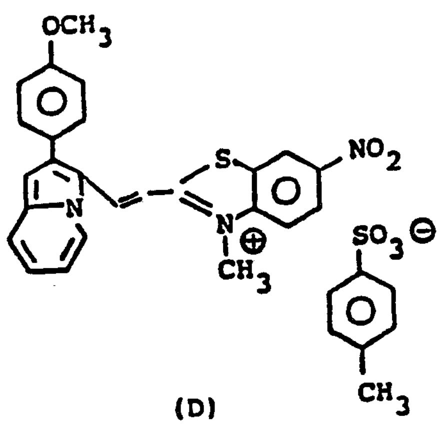

(D)

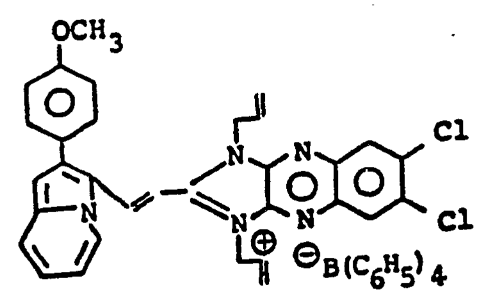

(E)

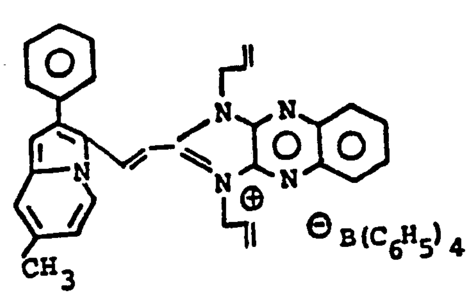

(F)

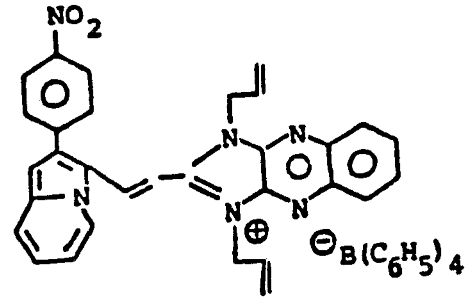

(G)

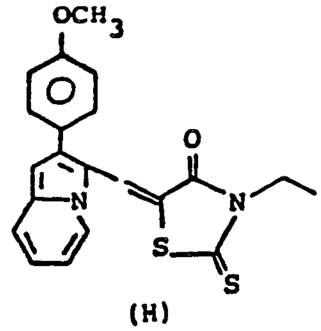

(H)

5. Lichtempfindliche Silberhalogenid-Emulsion, enthaltend eine wirksame Menge eines spektralen, sensibilisierenden Farbstoffs, ausgewählt aus der Gruppe, die aus Cyaninen der allgemeinen Formel I

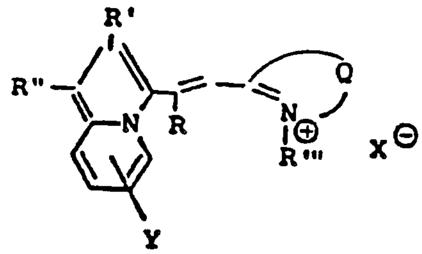

(I)

in der

R H oder Alkyl mit 1 bis 4 Kohlenstoff-Atomen ist,

R′ und R″ H, Alkyl mit 1 bis 7 Kohlenstoff-Atomen, substituiertes Alkyl, Aryl oder substituiertes Aryl ist und

R‴ irgendeine der durch R′ und R″ dargestellten Gruppen sein kann und auch Alkenyl mit nicht mehr als 7 Kohlenstoff-Atomen sein kann,

Y Wasserstoff, Alkyl mit 1 bis 4 Kohlenstoff-Atomen, $NO_2$ oder Halogen ist,

Q ausreichend Kohlenstoff-, Stickstoff- und/oder Schwefel-Atome bezeichnet, um einen 5- oder 6-gliedrigen heterocyclischen oder substituierten heterocyclischen Ring zu bilden, und

X ein Anion ist,

und aus Merocyaninen der allgemeinen Formel II

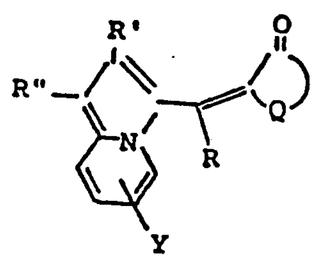

(II)

in der

R H oder Alkyl mit 1 bis 4 Kohlenstoff-Atomen ist,

R′, R″ und Y die oben angegebenen Bedeutungen haben und

Q ausreichend Kohlenstoff-, Stickstoff- und/oder Schwefel-Atome bezeichnet, um einen 5- oder 6-gliedrigen heterocyclischen oder substituierten heterocyclischen Ring zu bilden.

6. Emulsion nach Anspruch 5, worin der Farbstoff ein Farbstoff nach irgendeinem der Ansprüche 2 bis 4 ist.

7. Emulsion nach Anspruch 5 oder Anspruch 6, die eine Gelatine-Silberhalogenid-Emulsion ist, die 0,01 bis 1,2 g des spektralen sensibilisierenden Farbstoffs pro 1,5 mol Silberhalogenid enthält.

8. Emulsion nach irgendeinem der Ansprüche 5 bis 7, die Silberbromoiodid enthält.

9. Direkter positiver photographischer Film, umfassend einen Träger, eine verschleierte Gelatine-Silberhalogenid-Emulsion auf dem Träger und gegebenenfalls eine oder mehrere Hilfsschichten, dadurch gekennzeichnet, daß die Emulsion eine wirksame Menge eines spektralen sensibilisierenden Farbstoffs nach Anspruch 5 enthält.

10. Film nach Anspruch 9, worin der Farbstoff ein Farbstoff nach irgendeinem der Ansprüche 2 bis 4 ist.

11. Film nach Anspruch 9 oder Anspruch 10, worin der Träger Papier oder eine Polyester-Grundlage mit einer rückseitigen Lichthof-Schutzschicht ist.

12. Film nach irgendeinem der Ansprüche 9 bis 11, worin die Emulsion mit Ag in einer Menge von etwa 0,4 bis 3 $g/m^2$ beschichtet ist.

13. Film nach Anspruch 11 oder Anspruch 12, worin die Polyester-Grundlage eine Polyethylenterephthalat-Grundlage ist.

14. Film nach irgendeinem der Ansprüche 9 bis 13, worin die Emulsion eine wirksame Menge eines supersensibilisierenden Farbstoff-Paars enthält, in dem einer der Farbstoffe des Farbstoff-Paares ein sensibilisierender Farbstoff nach Anspruch 5 ist.

15. Film nach Anspruch 14, in dem einer der Farbstoffe des Farbstoff-Paares ein sensibilisierender Farbstoff nach irgendeinem der Ansprüche 2 bis 4 ist.

**Revendications**

1. Un colorant sensibilisateur spectral choisi dans le groupe formé par les cyanines répondant à la formule générale I:

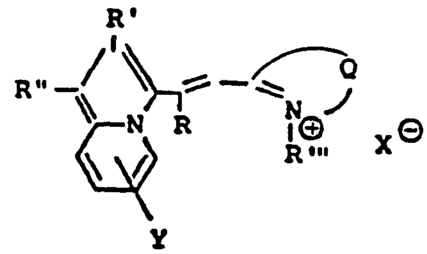

(I)

dans laquelle R est H ou un groupe alkyle de 1 à 4 atomes de carbone; R′ et R″ sont H, un groupe alkyle de 1 à 7 atomes de carbone, alkyle substitué, aryle ou aryle substitué, et R‴ peut être l'un quelconque des groupes représentés par R′ et R″ et peut également être un groupe alcényle ne comptant pas plus de 7 atomes de carbone; Y est l'hydrogène, un groupe alkyle de 1 à 4 atomes de carbone, $NO_2$ ou un halogène; Q représente suffisamment d'atomes de carbone, d'azote et/ou de soufre pour former un hétérocycle ou un hétérocycle substitué, penta- ou hexagonal; et X est un anion; et les mérocyanines répondant à la formule générale II:

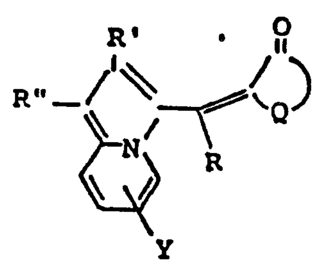

(II)

dans laquelle R est H ou un groupe alkyle de 1 à 4 atomes de carbone; R′, R″ et Y sont tels que définis ci-dessus; et Q représente suffisamment d'atomes de carbone, d'azote et/ou de soufre pour former un hétérocycle ou un hétérocycle substitué, penta- ou hexagonal; avec la condition que, dans la formule I, lorsque R est un atome d'hydrogène, R′ et R″ sont des groupes phényle et Y est un atome d'hydrogène, alors Q et R‴ ainsi que les atomes de carbone et d'azote auxquels ils sont reliés ne forment pas un groupes 1,3,3-triméthyl-2-indoléine.

2. Un colorant de formule I ou de formule II tel que revendiqué dans la revendication 1, dans lequel R″ est un atome d'hydrogène.

3. Un colorant tel que revendiqué dans la revendication 1, répondant à la formule

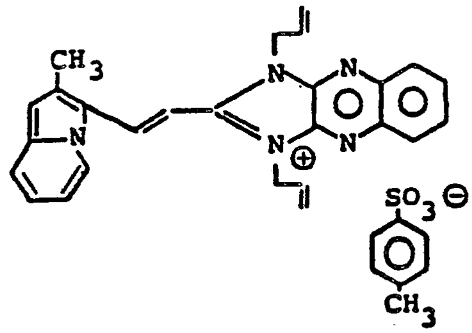

(B)

4. Un colorant tel que revendiqué dans la revendication 1, choisi parmi les composés des formules

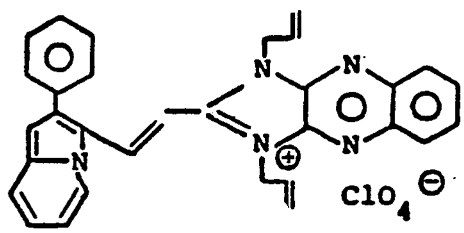

(A)

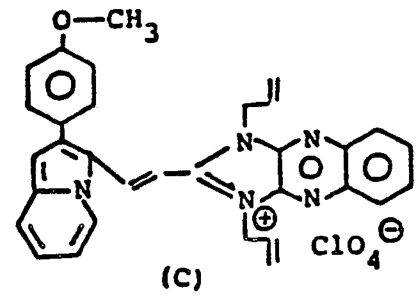

(C)

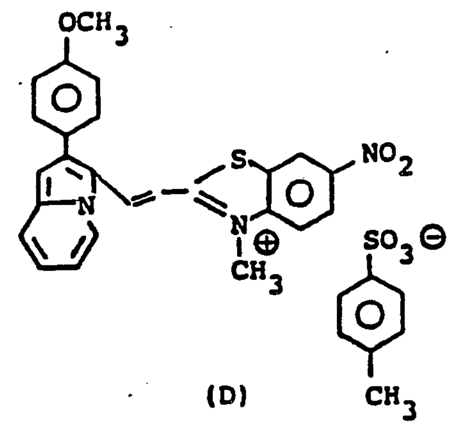

(D)

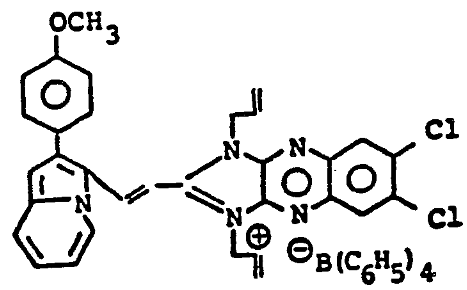

(E)

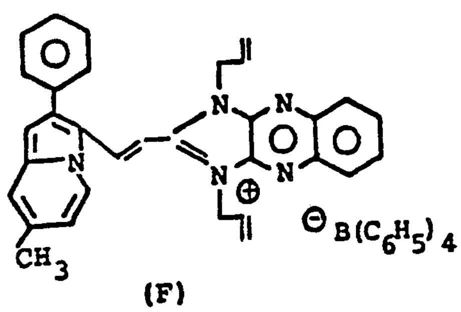

(F)

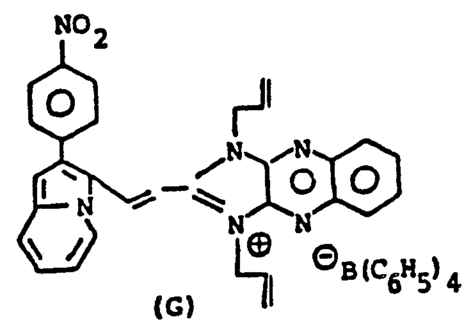

(G)

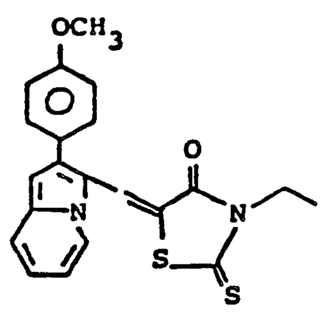

(H)

5. Une émulsion photosensible à l'halogénure d'argent, qui contient une quantité efficace d'un colorant sensibilisateur spectral choisi dans le groupe formé par les cyanines répondant à la formule générale I:

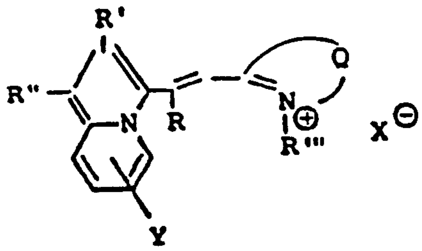

(I)

dans laquelle R est H ou un groupe alkyle de 1 à 4 atomes de carbone; R′ et R″ sont chacun H, un groupe alkyle de 1 à 7 atomes de carbone, alkyle substitué, aryle ou aryle substitué, et R‴ peut être l'un quelconque des groupes représentés par R′ et R″ et peut également être un groupe alcényle ne comptant pas plus de 7 atomes de carbone; Y est l'hydrogène, un groupe alkyle de 1 à 4 atomes de carbone, $NO_2$ ou un halogène; Q représente suffisamment d'atomes de carbone, d'azote et/ou de soufre pour former un hétérocycle ou un hétérocycle substitué, penta- ou hexagonal; et X est un anion; et les mérocyanines répondant à la formule générale II:

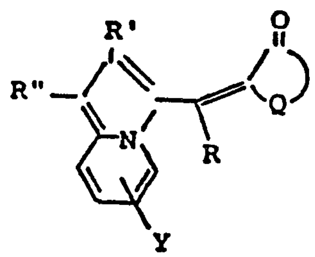

(II)

dans laquelle R est H ou un groupe alkyle de 1 à 4 atomes de carbone; R′, R″ et Y sont tels que définis ci-dessus; et Q représente suffisamment d'atomes de carbone, d'azote et/ou de soufre pour former un hétérocycle ou un hétérocycle substitué, penta- ou hexagonal.

6. Une émulsion telle que revendiquée dans la revendication 5, dans laquelle le colorant est tel que défini dans l'une quelconque des revendications 2 à 4.

7. Une émulsion telle que revendiquée dans la revendication 5 ou la revendication 6, qui est une émulsion de gélatine à l'halogènure d'argent contenant 0,01 à 1,2 g du colorant sensibilisateur spectral pour 1,5 mole d'halogénure d'argent.

8. Une émulsion telle que revendiquée dans l'une quelconque des revendications 5 à 7, qui contient du bromo-iodure d'argent.

9. Une pellicule photographique positive directe comprenant un support, une émulsion voilée de gélatine à l'halogénure d'argent disposée sur ledit support et, facultativement, une ou plusieurs couches auxiliaires, caractérisée en ce que l'émulsion contient une quantité efficace d'un colorant sensibilisateur spectral tel que défini dans la revendication 5.

10. Une pellicule telle que revendiquée dans la revendication 9, dans laquelle le colorant est tel que défini dans l'une quelconque des revendications 2 à 4.

11. Une pellicule telle que revendiquée dans la revendication 9 ou la revendication 10, dans laquelle le support est du papier ou une base de polyester portant une couche dorsale antihalo.

12. Une pellicule telle que revendiquée dans l'une quelconque des revendications 9 à 11, dans laquelle l'émulsion est appliquée sur le support à raison d'environ 0,4 à 3 g de $Ag/m^2$.

13. Une pellicule telle que revendiquée dans la revendication 11 ou la revendication 12, dans laquelle la base de polyester est une base de poly(téréphtalate d'éthylène).

14. Une pellicule telle que revendiquée dans l'une quelconque des revendications 9 à 14, dans laquelle l'émulsion contient une quantité efficace d'un couple de colorants hypersensibilisateur où l'un des éléments dudit couple de colorants est un colorant sensibilisateur tel que défini dans la revendication 5.

15. Une pellicule telle que revendiquée dans la revendication 14, dans laquelle l'un des éléments dudit couple de colorants est un colorant tel que défini dans l'une quelconque des revendications 2 à 4.